# EUROPEAN PATENT SPECIFICATION

(11) **EP 4 322 613 B1**
(45) Date of publication and mention of the grant of the patent: **07.10.2026**
(21) Application number: 23189236.5
(22) Date of filing: 02.08.2023
(51) Int. Cl.: H04W 36/00, H04W 4/06, H04W 76/40, H04W 76/11, H04W 76/30, H04W 88/06

(54) **MBS SESSION MAINTENANCE AFTER HANDOVER**
ERHALTUNG EINER MBS-SITZUNG NACH DER ÜBERGABE
MAINTENANCE DE SESSION MBS APRÈS TRANSFERT INTERCELLULAIRE

(30) Priority: 11.08.2022 US 202263371115 P; 21.07.2023 US 202318224690
(43) Date of publication of application: 14.02.2024
(73) Proprietor: MediaTek Inc., Hsin-Chu 300 (TW)
(72) Inventor: LIN, Yu-Hsin, Hsinchu City 30078 (TW); LIN, Yuan-Chieh, Hsinchu City 30078 (TW); CHEN, Chi-Hsien, Hsinchu City 30078 (TW)
(74) Representative: Hoefer & Partner Patentanwälte mbB

(56) References cited:
- "3rd Generation Partnership Project; Technical Specification Group Core Network and Terminals; Non-Access-Stratum (NAS) protocol for 5G System (5GS); Stage 3; (Release 17)", vol. CT WG1, no. V17.7.1, 27 June 2022 (2022-06-27), pages 1 - 991, XP052183455, Retrieved from the Internet <URL:https://ftp.3gpp.org/Specs/archive/24_series/24.501/24501-h71.zip 24501-h71.docx> [retrieved on 20220627]
- "3rd Generation Partnership Project; Technical Specification Group Services and System Aspects; Architectural enhancements for 5G multicast-broadcast services; Stage 2 (Release 17)", no. V17.3.0, 15 June 2022 (2022-06-15), pages 1 - 110, XP052182866, Retrieved from the Internet <URL:https://ftp.3gpp.org/Specs/archive/23_series/23.247/23247-h30.zip 23247-h30.docx> [retrieved on 20220615]
- ERICSSON: "Update [6.8] Mobility from E-UTRAN/EPC to NR/5GC", vol. SA WG2, no. Electronic, Elbonia; 20210412 - 20210416, 6 April 2021 (2021-04-06), XP051993668, Retrieved from the Internet <URL:https://ftp.3gpp.org/tsg_sa/WG2_Arch/TSGS2_144E_Electronic/Docs/S2-2102284.zip S2-2102284_23247_6.8_InterwokingE-UTRAN_NR.doc> [retrieved on 20210406]

## Description

### Field of the Invention

The disclosed embodiments relate generally to wireless communication, and, more particularly, to a method for Multicast Broadcast Services (MBS) session maintenance after handover.

### Background of the Invention

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless networks, such as GSM, CDMA, and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board has decided to focus the future NGMN activities on defining the end-to-end requirements for 5G new radio (NR) systems.

In 5G/NR, a protocol data unit (PDU) session defines the association between the UE and the data network that provides a PDU connectivity service. The PDU session establishment is a parallel procedure of PDN connection (bearer) procedure in 4G/LTE. Each PDU session is identified by a PDU session ID (PSI), and may include multiple QoS flows and QoS rules. Each PDU session can be established via a 5G access network (e.g.,3GPP radio access network (RAN), or via a non-3GPP access network). Both the network and the UE can initiate different PDU session procedures, e.g., PDU session establishment procedure, PDU session modification procedure, and PDU session release procedure, for managing PDU sessions.

Operators are seeking ways to balance data traffic between mobile cellular networks and non-3GPP access in a way that is transparent to users and reduces mobile network congestion. In 5GS, UEs that can be simultaneously connected to both 3GPP access and non-3GPP access (using 3GPP NAS signalling), thus the 5GS is able to take advantage of these multiple accesses to improve the user experience, optimize the traffic distribution across various accesses. Accordingly, 3GPP introduced Multi-Access (MA) PDU session in 5GS. A MA PDU session uses one 3GPP access network or one non-3GPP access network at a time, or simultaneously one 3GPP access network and one non-3GPP access network.

Multimedia Broadcast and Multicast Service (MBMS) is a broadcasting service offered via existing GSM and UMTS cellular networks. Recently, evolved MBMS (E-MBMS) has been introduced in the LTE specification for broadcasting or multicasting TV, films, and other information such as overnight transmission of newspapers in a digital form. In 5G networks, Multicast and Broadcast Services (MBS) is a point-to-multipoint service that can improve the network efficiency and user experience when transmitting the same content to multiple users. The design principle of 5G MBS is to minimize the implementation impact of the feature by reusing as much as possible 5G unicast architecture and functions.

5MBS (5G Multicast and Broadcast Services) should be used only when the associated PDU or MA PDU session is active. 5MBS session is only available for 3GPP access in 5GS. However, after intersystem change from 5G to 2/3G, or after the 5G-SRVCC (Single Radio Voice Call Continuity) handover from NG-RAN to UTRAN, all PDU sessions in 5GS will be released. Further, the UE can also transfer an existing PDU session for 3GPP access to an ePDG connected to EPC connection. It is undefined how network or UE maintains the MBS session after inter-system change from 5G to 2/3G, or after the 5G-SRVCC handover from NG-RAN to UTRAN, or when the UE transfer an existing PDU for 3GPP access to an ePDG connected to EPC connection.

A solution is sought.

### Summary of the Invention

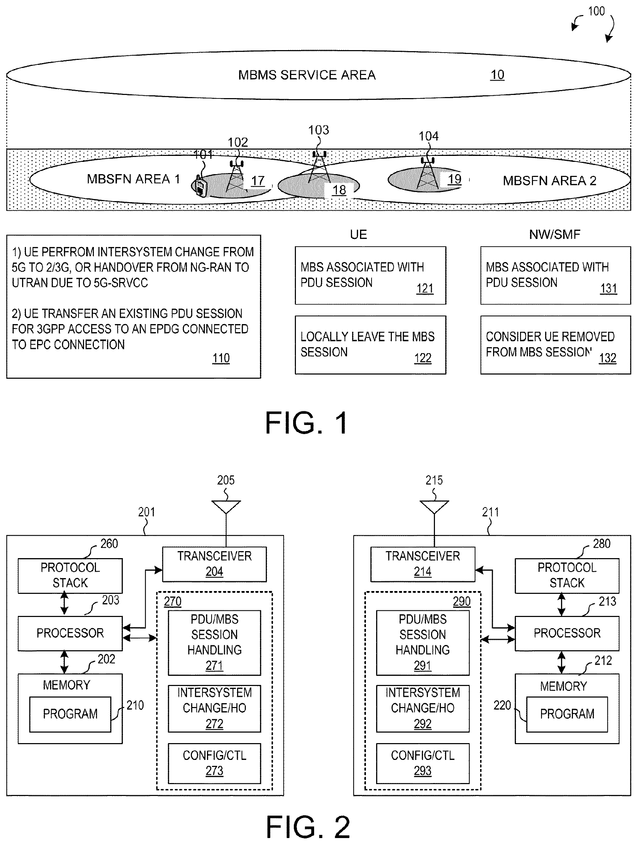

The invention is set out in the independent claims. The dependent claims define preferred embodiments of the invention. In the following, the invention is best understood in view of embodiments disclosed with relation to Figures 2-4. The remaining embodiments, examples and/or aspects of the disclosure are provided for illustrative purposes and for facilitating a better understanding of the invention.

As will be seen more clearly from the deteailed description following below, a method is disclosed herein. The method for maintaining MBS session when UE performs intersystem change is provided. UE maintains a PDU session in 5G network. UE then joins an MBS session for receiving MBS service over the associated PDU session. Later on, UE performs intersystem change from 5G to 2/3/4G. In a first scenario, UE performs intersystem change from 5G to 2/3G, or handovers from NG-RAN to UTRAN for 5G-SRVCC. UE then locally releases the PDU session. In a second scenario, UE transfers the PDU session from 3GPP access to an ePDG connection to EPC connection. From UE perspective, UE determines that the released or transferred PDU session is associated with the MBS session, and therefore locally leaves the MBS session. From NW perspective, NW determines that the released or transferred PDU session is associated with the MBS session, and therefore considers the UE is removed from the MBS session.

In another aspect of the invention, a claimed UE is disclosed in the detailed description here below, the UE maintains a Packet Data Unit (PDU) session in a 5G network, wherein the PDU session has a PDU session ID (PSI). In step 502, the UE joins one or more multicast broadcast services (MBS) sessions that are associated with the PDU session. In step 503, the UE performs an intersystem change from 5G to 2/3G by the UE and locally releases the PDU session, or transferring the PDU session in 5G to a Protocol Data Network (PDN) connection in 4G. In step 504, the UE locally leaves the one or more MBS sessions that are associated with the PDU session.

In another aspect of the invention, a claimed network entity is disclosed in the detailed description here below, the network entity maintains a Packet Data Unit (PDU) session for a User Equipment (UE) in a 5G network, wherein the PDU session has a PDU session ID (PSI), wherein the PDU session is associated with one or more multicast broadcast services (MBS) sessions for the UE. The network entity determines that an intersystem change is performed from 5G to 2/3G, wherein the network entity locally releases the PDU session. Alternatively, the network entity determines the PDU session in 5G is transferred to a Protocol Data Network (PDN) connection in 4G. The network entity considers that the UE is removed from the one or more MBS sessions associated with the PDU session

Other embodiments and advantages are described in the detailed description below. This summary does not purport to define the invention.

### Brief Description of the Drawings

The accompanying drawings, where like numerals indicate like components, illustrate embodiments of the invention.
Figure 1 illustrates an exemplary 5G network supporting Multicast Broadcast Services (MBS) and maintaining MBS session during intersystem change in accordance with one novel aspect.
Figure 2 illustrates simplified block diagrams of a user equipment (UE) and a network entity in accordance with embodiments of the current invention.
Figure 3 illustrates one embodiment of handling an MBS session after intersystem change from 5G to 2/3G or after 5G-SRVCC handover from NG-RAN to UTRAN in accordance with one novel aspect.
Figure 4 illustrates one embodiment of handling an MBS session when UE transfers an existing PDU session from 3GPP access to an ePDG connected to EPC connection in accordance with one novel aspect.
Figure 5 is a flow chart of a method of UE handling MBS session maintenance after intersystem change from 5G to 2/3G or after 5G-SRVCC handover from NG-RAN to UTRAN in accordance with one novel aspect of the present invention.
Figure 6 is a flow chart of a method of UE handling MBS session maintenance when UE transfers an existing PDU session for 3GPP access to an ePDG connected to EPC connection in accordance with one novel aspect of the present invention.

### Detailed Description

Reference will now be made in detail to some embodiments of the invention, examples of which are illustrated in the accompanying drawings.

Figure 1 illustrates an exemplary 5G network 100 supporting Multicast Broadcast Services (MBS) and maintaining MBS session during intersystem change in accordance with one novel aspect. 5G new radio (NR) network 100 includes a user equipment (UE) 101 and a plurality of base stations gNB 102, gNB 103, and gNB 104. MBS service area 10 covers multiple MBS Single Frequency Network (MBSFN) areas (e.g., MBSFN area 1 and MBSFN area 2). An MBSFN area comprises a group of cells within an MBSFN service area of a network that are coordinated to achieve MBSFN transmission. An MBSFN service area is defined as an area of network in which all base stations (gNBs) can be synchronized to perform MBSFN transmission. MBS service areas are capable of supporting one or more MBSFN areas. On a given frequency layer, an eNB can only belong to one MBS service area. Under the MBS service area, a cell can belong to one or more MBSFN areas and support MBS services for all the belonging MBSFN areas. In Figure 1, gNB 102 belongs to MBSFN area 1 and serves cell 17 for MBS service over a component carrier (CC), gNB 103 belongs to both MBSFN area 1 and area 2 and serves cell 18 for MBS service over the CC, gNB 104 belongs to MBSFN area 2 and serves cell 19 for MBS service over the CC. UE 101 registers to a PLMN, and subscribes to a specific MBS service in cell 17 served by gNB 102.

EPS networks are packet-switched (PS) Internet Protocol (IP) networks. When a UE joins an evolved packet system (EPS) network, a Packet Data Network (PDN) address (i.e., the one that can be used on the PDN) is assigned to the UE for its connection to the PDN. In 4G, EPS has defined a Default EPS Bearer to provide the IP Connectivity that is Always-On. In 5G, a PDU session establishment procedure is a parallel procedure of a PDN connection procedure in 4G. A PDU session defines the association between the UE and the data network that provides a PDU connectivity service. Each PDU session is identified by a PDU session ID (PSI), and can be established over a 3GPP RAN, and/or over a non-3GPP access network for radio access.

5G session management (5GSM) for PDU sessions over both 3GPP access and non-3GPP access are managed by AMF (Access management function) and SMF (Session management function) via NAS signaling. UE can request to join an MBS session by using PDU session establishment procedure or PDU session modification procedure with the Requested MBS container IE for the following MBS operations: Join MBS session and Leave MBS session. The network can also apply the PDU session establishment procedure or PDU session modification procedure with the Received MBS container IE for the following operations/decisions: MBS service area update, MBS join is accepted, MBS join is rejected, and Remove UE from the MBS session.

In 5G networks, 5MBS (5G MBS) is a point-to-multipoint service that can improve the network efficiency and user experience when transmitting the same content to multiple users. The design principle of 5G MBS is to minimize the implementation impact of the feature by reusing as much as possible 5G unicast architecture and functions. 5MBS should be used only when the associated PDU or MA PDU session is active. 5MBS session is only available for 3GPP access in 5GS. However, after intersystem change from 5G to 2/3G, or after the 5G-SRVCC (Single Radio Voice Call Continuity) handover from NG-RAN to UTRAN, all PDU sessions in 5GS will be released. Further, the UE can also transfer an existing PDU session for 3GPP access to an ePDG connected to EPC connection. It is undefined how network or UE maintains the MBS session after inter-system change from 5G to 2/3G, or after the 5G-SRVCC handover from NG-RAN to UTRAN, or when the UE transfer an existing PDU for 3GPP access to an ePDG connected to EPC connection.

In accordance with one novel aspect, a method for maintaining MBS session when UE performs intersystem change is provided. UE 101 maintains a PDU session in 5G network 100. UE 101 then joins an MBS session for receiving MBS service over the associated PDU session. Later on, UE performs intersystem change from 5G to 2/3G or from 5G to 4G (110). In a first scenario, UE 101 performs intersystem change from 5G to 2/3G, or handovers from NG-RAN to UTRAN for 5G-SRVCC. UE 101 then locally releases the PDU session. In a second scenario, UE 101 transfers the PDU session from 3GPP access to an ePDG connection to EPC connection. From UE perspective, UE 101 determines the that released or transferred PDU session is associated with the MBS session (121), and then locally leaves the MBS session (122). From NW perspective, AMF/SMF determines that the released or transferred PDU session is associated with the MBS session (131), and then considers UE 101 is removed from the MBS session (132).

Figure 2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes PDU session handling circuit 291 that handles PDU establishment, modification, and release procedures, intersystem change and handover handling circuit 292 for performing intersystem change and handover, and configuration and control circuit 293 that provides different parameters to configure and control UE of related functionalities including PDU and MBS session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor associated with software may be used to implement and configure features of UE 201.

UE 201 also includes protocol stacks 260 and a set of control function modules and circuits 270. Protocol stacks 260 includes NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network.

In one example, control function modules and circuits 270 includes a PDU/MBS session handling circuit 271 that performs PDU session establishment, modification, and release procedures with the network, an intersystem change and handover handling circuit 272 that performs intersystem change and handover, and a config and control circuit 273 that handles configuration and control parameters for mobility management and session management. In one example, the 5GS MBS capable UE 201 joins an MBS session associated with a PDU session, and performs intersystem change or handover to 2/3/4G later on. If the PDU session is no longer available for 3GPP access, UE 201 locally leaves the MBS session, and the network considers the UE is removed from the MBS session.

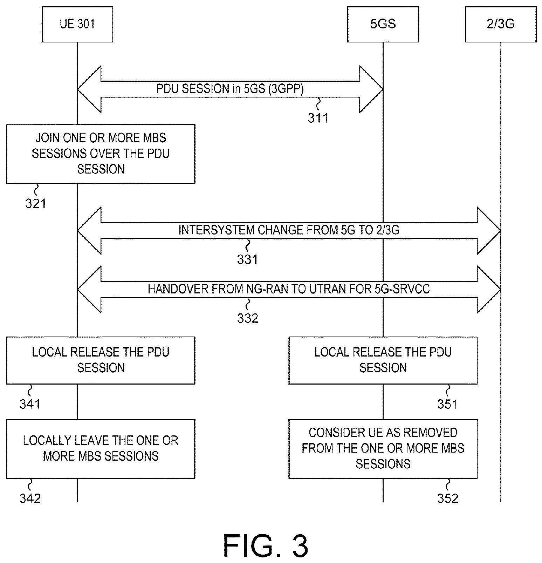

Figure 3 illustrates one embodiment of handling an MBS session after intersystem change from 5G to 2/3G or after 5G-SRVCC handover from NG-RAN to UTRAN in accordance with one novel aspect. In step 311, UE 301 establishes a PDU session in 5GS. In step 321, UE 301 joins one or more MBS sessions over the associated PDU session. In one example, UE 301 initiates a PDU session establishment procedure by sending a PDU session establishment request message to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". The network then sends a PDU session establishment accept message, which includes a "Received MBS Container IE", with an MBS decision = "MBS join is accepted" + TMGI + optionally Source IP address information and Destination IP address information = "corresponding address". The accept message may also include Received MBS information: MBS start time, MBS security container, MBS service area = "MBS TAI list, the NR CGI list or both". The accept message may also include MBS service area = "MBS TAI list, the NR CGI list or both". Upon receiving the PDU session establishment accept message, the PDU session is established and is associated with the MBS sessions.

In step 331, UE 301 performs an intersystem change procedure from 5G to 2/3G. In one example, in step 332, UE 301 handovers the PDU session from NG-RAN to UTRAN for 5G-SRVCC. SRVCC stands for Single Radio Voice Call Continuity. It is a handover technology between "VoIP over IMS in LTE/NG-RAN" and Voice Call (CS) in a legacy system, e.g., WCDMA/UTRAN. It means it is for handover between a packet call in LTE/NG-RAN and a circuit call in a legacy system WCDMA/UTRAN, such that the voice call can be continued, and would not be interrupted upon handover from 5G to 2/3G. After the intersystem change or handover is completed, in step 341, UE 301 locally releases the PDU session. In step 342, UE 301 locally leaves the MBS session. Since 5MBS should be used only when the associated PDU session is active, UE thus needs to leave the one or more MBS sessions once the associated PDU session is released. From the network perspective, in step 351, the network locally releases the PDU session. In step 352, the network considers UE 301 as removed from the associated one or more MBS sessions.

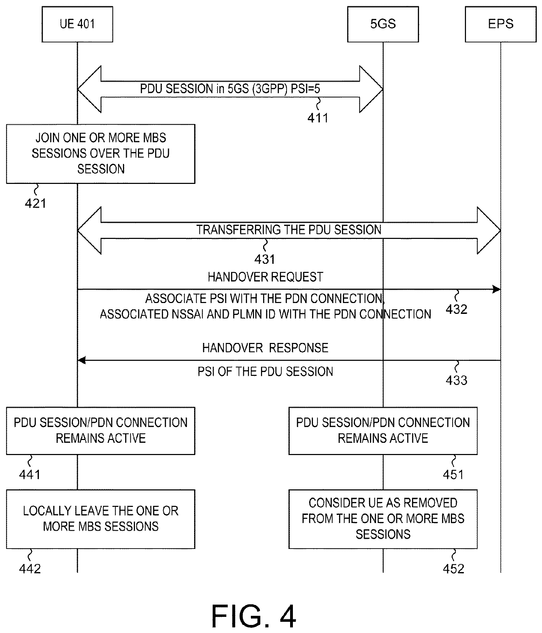

Figure 4 illustrates one embodiment of handling an MBS session when UE transfers an existing PDU session from 3GPP access to an ePDG connected to EPC connection in accordance with one novel aspect. In step 411, UE 401 establishes a PDU session (over 3GPP access, PSI=5) in 5GS. In step 421, UE 401 joins one or more MBS sessions over the associated PDU session. In one example, UE 401 initiates a PDU session establishment procedure by sending a PDU session establishment request message to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". The network then sends a PDU session establishment accept message, which includes a "Received MBS Container IE", with an MBS decision = "MBS join is accepted" + TMGI + optionally Source IP address information and Destination IP address information = "corresponding address". The accept message may also include Received MBS information: MBS start time, MBS security container, MBS service area = "MBS TAI list, the NR CGI list or both". The accept message may also include MBS service area = "MBS TAI list, the NR CGI list or both". Upon receiving the PDU session establishment accept message, the PDU session is established and is associated with the MBS sessions.

In step 431, UE 401 performs transferring the PDU session. In one example, in step 432, UE 401 sends a handover request to the network to transfer the existing PDU session (PSI=5) from 3GPP access in 5G to an ePDG connected to EPC connection in 4G. The UE set the PDU Session ID field of the N1_MODE_CAPABILITY Notify payload to the PDU session ID of the existing PDU session that is being transferred, and associate the PDU session ID with the PDN connection that is being established. The UE shall associate the S-NSSAI of the existing PDU session that is being transferred and the related PLMN ID with the PDN connection that is being established. In step 433, UE 401 receives a handover response from the network. The response includes the PSI (PSI=5) of the existing PDU session being transferred.

Once the handover is completed, the PDU session (PSI=5) is transferred from 3GPP to the PDN connection over non-3GPP. From UE perspective, the PDU session/PDN connection remains active, however, only over the non-3GPP access. In step 442, UE 401 locally leaves the MBS session, since 5MBS session is only available for 3GPP access in 5GS. UE 401 thus needs to leave the one or more MBS sessions once the associated PDU session over 3GPP access is transferred. From the network perspective, in step 451, the network considers the PDU session/PDN connection active, but only over the non-3GPP access. In step 452, the network considers UE 401 as removed from the associated one or more MBS sessions.

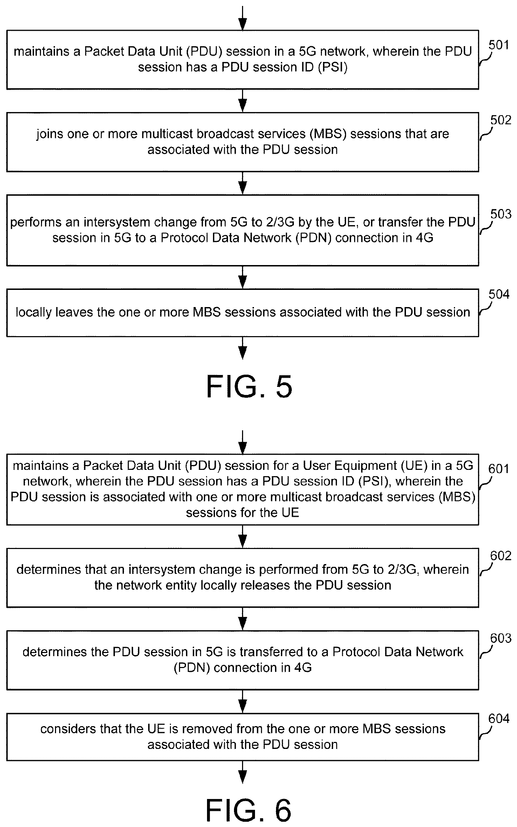

Figure 5 is a flow chart of a method of UE handling MBS session maintenance after intersystem change from 5G to 2/3/4G in accordance with one novel aspect of the present invention. In step 501, a UE maintains a Packet Data Unit (PDU) session in a 5G network, wherein the PDU session has a PDU session ID (PSI). In step 502, the UE joins one or more multicast broadcast services (MBS) sessions that are associated with the PDU session. In step 503, the UE performs an intersystem change from 5G to 2/3G by the UE, or transfers the PDU session in 5G to a Protocol Data Network (PDN) connection in 4G. In step 504, the UE locally leaves the one or more MBS sessions that are associated with the PDU session.

Figure 6 is a flow chart of a method of network handling MBS session maintenance after intersystem change from 5G to 2/3/4G in accordance with one novel aspect of the present invention. In step 601, a network entity maintains a Packet Data Unit (PDU) session for a User Equipment (UE) in a 5G network, wherein the PDU session has a PDU session ID (PSI), wherein the PDU session is associated with one or more multicast broadcast services (MBS) sessions for the UE. In step 602, the network entity determines that an intersystem change is performed from 5G to 2/3G, wherein the network entity locally releases the PDU session. Alternatively, in step 603, the network entity determines the PDU session in 5G is transferred to a Protocol Data Network (PDN) connection in 4G. In step 604, the network entity considers that the UE is removed from the one or more MBS sessions associated with the PDU session.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
maintaining a Packet Data Unit, PDU, session by a user equipment, UE, (101) in a 5G network, wherein the PDU session has a PDU session ID, PSI;
joining by the UE one or more multicast broadcast services (MBS) sessions that are associated with the PDU session;
performing an intersystem change from 5G to 2/3G by the UE (101), or transferring by the UE the PDU session in 5G to a Protocol Data Network, PDN, connection in 4G, wherein the PDN connection is established via an evolved packet data gateway, ePDG, connected to an evolved packet core, EPC, over non-3GPP access; and
locally leaving by the UE the one or more MBS sessions that are associated with the PDU session.

2. The method of Claim 1, wherein the intersystem change from 5G to 2/3G is triggered by a handover from NG-RAN to UTRAN.

3. The method of Claim 2, wherein the handover is performed for 5G-SRVCC, Single Radio Voice Call Continuity.

4. The method of Claim 2, wherein the UE locally releases the PDU session.

5. The method of Claim 1, wherein the PDU session is established in 5G over 3GPP access to be associated with the one or more MBS sessions.

6. The method of Claim 1, wherein the UE sets a PDU Session ID field to the PSI of the PDU session, and associates the PSI with the PDN connection that is being established.

7. The method of Claim 1, wherein the UE associates Single Network Slice Selection Assistance information, S-NSSAI, of the PDU session and a related PLMN ID with the PDN connection that is being established.

8. A method, comprising:
maintaining a Packet Data Unit, PDU, session for a User Equipment, UE, (101) by a network entity in a 5G network, wherein the PDU session has a PDU session ID, PSI, wherein the PDU session is associated with one or more multicast broadcast services, MBS, sessions for the UE (101);
determining by the network entity that an intersystem change is performed from 5G to 2/3G, wherein the network entity locally releases the PDU session; or
transferring by the network entity the PDU session in 5G to a Protocol Data Network, PDN, connection in 4G, wherein the PDN connection is established via an evolved packet data gateway, ePDG, connected to an evolved packet core, EPC, over non-3GPP access; and
considering by the network entity that the UE is removed from the one or more MBS sessions associated with the PDU session.

9. The method of Claim 8, wherein the intersystem change from 5G to 2/3G is triggered by a handover from NG-RAN to UTRAN for 5G-SRVCC, Single Radio Voice Call Continuity.

10. The method of Claim 8, wherein a PDU Session ID field is set to the PSI of the PDU session, and the PSI is associated with the PDN connection that is being established.

11. The method of Claim 8, wherein Single Network Slice Selection Assistance information, S-NSSAI, of the PDU session and a related PLMN ID are associated with the PDN connection that is being established.

12. A User Equipment, UE, (101), comprising:
a protocol data unit, PDU, session handling circuit (271), configured to maintain a PDU session in a 5G network, wherein the PDU session has a PDU session ID, PSI;
an MBS session handling circuit (271), configured to join one or more multicast broadcast services, MBS, sessions that are associated with the PDU session;
an intersystem change handling circuit (272), configured to perform an intersystem change from 5G to 2/3G, or transfer the PDU session in 5G to a Protocol Data Network, PDN, connection in 4G, wherein the PDN connection is established via an evolved packet data gateway, ePDG, connected to an evolved packet core, EPC, over non-3GPP access;
and the MBS session handling circuit (271) is configured to leave the one or more MBS sessions associated with the PDU session.

13. The UE of claim 12, furthermore configured to perform the steps of the methods of any of claims 2-7.

## Patentansprüche

1. Verfahren, umfassend:
Aufrechterhalten einer Paketdateneinheit-, PDU-, Sitzung durch ein Benutzergerät, UE, (101) in einem 5G-Netzwerk, wobei die PDU-Sitzung eine PDU-Sitzung-ID, PSI, aufweist;
Beitreten durch das UE zu einer oder mehreren Multicast-Rundfunkdienst- (MBS-) Sitzungen, die mit der PDU-Sitzung verbunden sind;
Durchführen eines Wechsels zwischen Systemen von 5G zu 2/3G durch das UE (101) oder Übertragen durch das UE der PDU-Sitzung in 5G zu einer Protokolldatennetzwerk-, PDN-, Verbindung in 4G, wobei die PDN-Verbindung über ein evolved-Paketdaten-Gateway, ePDG, hergestellt wird, das mit einem evolved-Paketkern, EPC, über Nicht-3GPP-Zugang verbunden ist; und
lokales Verlassen durch das UE der einen oder mehreren MBS-Sitzungen, die mit der PDU-Sitzung verbunden sind.

2. Verfahren nach Anspruch 1, wobei der Wechsel zwischen Systemen von 5G zu 2/3G durch eine Übergabe von NG-RAN zu UTRAN ausgelöst wird.

3. Verfahren nach Anspruch 2, wobei die Übergabe für 5G-SRVCC, Single Radio Voice Call Continuity, durchgeführt wird.

4. Verfahren nach Anspruch 2, wobei das UE die PDU-Sitzung lokal freigibt.

5. Verfahren nach Anspruch 1, wobei die PDU-Sitzung in 5G über 3GPP-Zugang eingerichtet wird, um mit der einen oder den mehreren MBS-Sitzungen verbunden zu werden.

6. Verfahren nach Anspruch 1, wobei das UE ein PDU-Sitzung-ID-Feld auf die PSI der PDU-Sitzung setzt und die PSI mit der PDN-Verbindung verbindet, die eingerichtet wird.

7. Verfahren nach Anspruch 1, wobei das UE Single-Network-Slice-Selection-Assistance-Information, S-NSSAI, der PDU-Sitzung und eine zugehörige PLMN-ID mit der PDN-Verbindung verbindet, die eingerichtet wird.

8. Verfahren, umfassend:
Aufrechterhalten einer Paketdateneinheit-, PDU-, Sitzung für ein Benutzergerät, UE, (101) durch eine Netzwerkentität in einem 5G-Netzwerk, wobei die PDU-Sitzung eine PDU-Sitzung-ID, PSI, aufweist, wobei die PDU-Sitzung mit einer oder mehreren Multicast-Broadcast-Dienst-, MBS-, Sitzungen für das UE (101) verbunden ist;
Bestimmen durch die Netzwerkentität, dass ein Wechsel zwischen Systemen von 5G zu 2/3G durchgeführt wird, wobei die Netzwerkentität die PDU-Sitzung lokal freigibt; oder
Übertragen durch die Netzwerkentität der PDU-Sitzung in 5G zu einer Protokolldatennetzwerk-, PDN-, Verbindung in 4G, wobei die PDN-Verbindung über ein evolved-Paketdaten-Gateway, ePDG, hergestellt wird, das mit einem evolved-Paketkern, EPC, über Nicht-3GPP-Zugang verbunden ist; und
Berücksichtigen durch die Netzwerkentität, dass das UE aus der einen oder den mehreren MBS-Sitzungen entfernt wird, die mit der PDU-Sitzung verbunden sind.

9. Verfahren nach Anspruch 8, wobei der Wechsel zwischen Systemen von 5G zu 2/3G durch eine Übergabe von NG-RAN zu UTRAN für 5G-SRVCC, Single Radio Voice Call Continuity, ausgelöst wird.

10. Verfahren nach Anspruch 8, wobei ein PDU-Sitzung-ID-Feld auf die PSI der PDU-Sitzung gesetzt wird und die PSI mit der PDN-Verbindung verbunden ist, die eingerichtet wird.

11. Verfahren nach Anspruch 8, wobei Single-Network-Slice-Selection-Assistance-Information, S-NSSAI, der PDU-Sitzung und eine zugehörige PLMN-ID mit der PDN-Verbindung verbunden sind, die eingerichtet wird.

12. Benutzergerät, UE, (101), umfassend:
eine Protokolldateneinheit-, PDU-, Sitzung-Handhabungsschaltung (271), die konfiguriert ist, um eine PDU-Sitzung in einem 5G-Netzwerk aufrechtzuerhalten, wobei die PDU-Sitzung eine PDU-Sitzung-ID, PSI, aufweist;
eine MBS-Sitzung-Handhabungsschaltung (271), die konfiguriert ist, um sich einer oder mehreren Multicast-Broadcast-Dienst-, MBS-, Sitzungen anzuschließen, die mit der PDU-Sitzung verbunden sind;
eine Handhabungsschaltung für Wechsel zwischen Systemen (272), die konfiguriert ist, um einen Wechsel zwischen Systemen von 5G zu 2/3G durchzuführen oder die PDU-Sitzung in 5G zu einer Protokolldatennetzwerk-, PDN-, Verbindung in 4G zu übertragen, wobei die PDN-Verbindung über ein evolved-Paketdaten-Gateway, ePDG, hergestellt wird, das mit einem evolved-Paketkern, EPC, über Nicht-3GPP-Zugang verbunden ist;
und die MBS-Sitzung-Handhabungsschaltung (271) konfiguriert ist, um die eine oder mehreren MBS-Sitzungen zu verlassen, die mit der PDU-Sitzung verbunden sind.

13. UE nach Anspruch 12, ferner konfiguriert, um die Schritte der Verfahren nach einem der Ansprüche 2-7 durchzuführen.

## Revendications

1. Procédé, comprenant :
le maintien d'une session d'unité de données en paquets, PDU, par un équipement utilisateur, UE, (101) dans un réseau 5G, dans lequel la session PDU a un ID de session PDU, PSI ;
la jonction par l'UE d'une ou plusieurs sessions de services de diffusion/multidiffusion (MBS) qui sont associées à la session PDU ;
l'exécution d'un changement intersystème de 5G à 2/3G par l'UE (101), ou le transfert par l'UE de la session PDU en 5G à une connexion de réseau de données de protocole, PDN, en 4G, dans lequel la connexion PDN est établie via une passerelle de données en paquets évoluée, ePDG, connectée à un coeur de paquet évolué, EPC, sur un accès non 3GPP ; et
le fait de laisser localement par l'UE les une ou plusieurs sessions MBS qui sont associées à la session PDU.

2. Procédé selon la revendication 1, dans lequel le changement intersystème de 5G à 2/3G est déclenché par un transfert intercellulaire de NG-RAN à UTRAN.

3. Procédé selon la revendication 2, dans lequel le transfert intercellulaire est effectué pour une continuité d'appel vocal radio unique, SRVCC, 5G.

4. Procédé selon la revendication 2, dans lequel l'UE libère localement la session PDU.

5. Procédé selon la revendication 1, dans lequel la session PDU est établie dans un accès 5G sur 3GPP pour être associée aux une ou plusieurs sessions MBS.

6. Procédé selon la revendication 1, dans lequel l'UE établit un champ d'ID de session PDU au PSI de la session PDU, et associe le PSI à la connexion PDN qui est en cours d'établissement.

7. Procédé selon la revendication 1, dans lequel l'UE associe des informations d'assistance de sélection de tranche de réseau unique, S-NSSAI, de la session PDU et un ID de PLMN associé à la connexion PDN qui est en cours d'établissement.

8. Procédé, comprenant :
le maintien d'une session d'unité de données en paquets, PDU, pour un équipement utilisateur, UE, (101) par une entité de réseau dans un réseau 5G, dans lequel la session PDU a un ID de session PDU, PSI, dans lequel la session PDU est associée à une ou plusieurs sessions de services de diffusion/multidiffusion, MBS, pour l'UE (101) ;
la détermination par l'entité de réseau qu'un changement intersystème est effectué de 5G à 2/3G, dans lequel l'entité de réseau libère localement la session PDU ; ou
le transfert par l'entité de réseau de la session PDU en 5G à une connexion de réseau de données de protocole, PDN, en 4G, dans lequel la connexion PDN est établie via une passerelle de données en paquets évoluée, ePDG, connectée à un coeur de paquet évolué, EPC, sur un accès non 3GPP ; et
le fait de considérer par l'entité de réseau que l'UE est retiré des une ou plusieurs sessions MBS associées à la session PDU.

9. Procédé selon la revendication 8, dans lequel le changement intersystème de 5G à 2/3G est déclenché par un transfert intercellulaire de NG-RAN à UTRAN pour une continuité d'appel vocal radio unique, SRVCC, 5G.

10. Procédé selon la revendication 8, dans lequel un champ d'ID de session PDU est établi au PSI de la session PDU, et le PSI est associé à la connexion PDN qui est en cours d'établissement.

11. Procédé selon la revendication 8, dans lequel des informations d'assistance de sélection de tranche de réseau unique, S-NSSAI, de la session PDU et un ID de PLMN associé sont associés à la connexion PDN qui est en cours d'établissement.

12. Équipement utilisateur, UE, (101), comprenant :
un circuit de gestion de session d'unité de données de protocole, PDU, (271), configuré pour maintenir une session PDU dans un réseau 5G, dans lequel la session PDU a un ID de session PDU, PSI ;
un circuit de gestion de session MBS (271), configuré pour joindre une ou plusieurs sessions de services de diffusion/multidiffusion, MBS, qui sont associées à la session PDU ;
un circuit de gestion de changement intersystème (272), configuré pour effectuer un changement intersystème de 5G à 2/3G, ou transférer la session PDU en 5G à une connexion de réseau de données de protocole, PDN, en 4G, dans lequel la connexion PDN est établie via une passerelle de données en paquets évoluée, ePDG, connectée à un coeur de paquet évolué, EPC, sur un accès non 3GPP ;
et le circuit de gestion de session MBS (271) est configuré pour laisser les une ou plusieurs sessions MBS associées à la session PDU.

13. UE selon la revendication 12, configuré en outre pour effectuer les étapes des procédés selon l'une quelconque des revendications 2 à 7.
